# EUROPEAN PATENT SPECIFICATION

(11) **EP 1 380 087 B1**
(45) Date of publication and mention of the grant of the patent: **14.05.2008**
(21) Application number: 01921642.3
(22) Date of filing: 20.04.2001
(51) Int. Cl.: H02J 1/14, B60R 16/02

(54) **MOTOR VEHICLE ELECTRICAL LOAD MANAGEMENT**
ELEKTRISCHE LASTENSTEUERUNG EINES KRAFTFAHRZEUGES
GESTION DE CHARGE ELECTRIQUE POUR VEHICULE A MOTEUR

(43) Date of publication of application: 14.01.2004
(73) Proprietor: JAGUAR CARS LIMITED, Whitley Coventry CV3 4LF (GB)
(72) Inventor: PICKERING, Stephen, Robert, Coventry, West Midlands CV3 4BS (GB)
(74) Representative: Messulam, Alec Moses
(86) International application number: PCT/GB2001/001772
(87) International publication number: WO 2002/087053

(56) References cited:
- DE-A- 4 422 329
- DE-C- 3 936 638
- US-A- 5 754 445
- US-A- 5 831 345

## Description

The present invention relates to a motor vehicle with an electrical load management system.

The demands placed on typical motor vehicle electrical systems are ever increasing. This is due to the increasing prevalence of features such as electric windows, heated electrical seats, external mirrors and windows, multiple cabin ventilation blowers, and adaptive suspension damping. These consumers of electrical power are, of course, in addition to standard features such as head lamps, turn signal indicators, wind screen wipers, etc. Collectively, all such features, which consume electric power, are referred to herein as "electrical consumer units".

The increasing demands of electrical consumer units place additional demands on the vehicle electrical system, which comprises the vehicle battery, charging system, and electrical power distribution system including wiring looms throughout the vehicle. A particular model of motor vehicle may be manufactured as one of several model lines, each of which has different, standard electrical consumer units and different optional electrical consumer units. Usually, most vehicles may have some, but not all of the optional electrical consumer units. If all vehicles in a model or model line are provided with a vehicle electrical system specified to meet the maximum possible electrical demand of the most highly specified model line, taking into consideration also adverse environmental conditions, then most vehicles will be burdened with an over capable and expensive vehicle electrical system. In addition to the problem of excess cost, this also imposes a significant weight penalty to such a highly specified vehicle.

One proposed solution to this problem has been disclosed in patent document GB 2 329 082, in which a control unit monitors voltage drop in a sub-region of the motor vehicle wiring system, and then turns off, or modulates on and off, an electrical consumer unit which is tolerant of such voltage drops, such as a heated rear window unit. This permits the gauge of wiring to be reduced, while ensuring that essential electrical consumers for which voltage drops are undesirable, such a rear lights, are not operated at low voltage. This however means that an electrical consumer unit may be inoperative when a driver of the vehicle selects that unit for operation.

Document DE 39 36 638 C describes a motor vehicle with an electrical load management system comprising a plurality of electrical consumer units including at least one user-activatable consumer unit which has a control by which the unit may be activated by a user. An electrical source supplies electrical current to the consumer units and a monitoring means monitors the ability of the electrical source to deliver electrical current to the consumer units. An electrical current load controlling means is responsive to the monitoring means, when the ability of the electrical source to deliver electrical current to the consumer units is impaired, in order to limit the electrical current supplied to at least some of the consumer units including the user-activatable consumer unit according to predetermined criteria by which some consumer units are accorded priority over other consumer units as regards any electrical current limitation.

It is an object of the present invention to provide a more convenient motor electrical load management system.

According to the present invention, there is provided a motor vehicle with an electrical load management system comprising:
a) a plurality of electrical consumer units including at least one user-activatable consumer unit which has a control by which said unit may be activated by a user;
b) an electrical source for supplying electrical current to the consumer units;
c) a monitoring means for monitoring the ability of the electrical source to deliver electrical current to the consumer units;
d) an electrical current load controlling means that is responsive to the monitoring means when the ability of the electrical source to deliver electrical current to the consumer units is impaired, in order to limit the electrical current supplied to at least some of the consumer units including said user-activatable consumer unit according to predetermined criteria by which some consumer units are accorded priority over other consumer units as regards any electrical current limitation;
   characterised in that
e) the electrical current load controlling means are adapted to following activation of a user-activatable consumer unit of a lower priority and when the requested current exceeds an allowable maximum current, to alter the predetermined criteria for a temporary period to increase the priority accorded to said activated consumer unit so that the consumer unit is activated at least during the temporary period, the electrical load current controlling means being further adapted to allocate current to others of the consumer units according to criteria for the other consumer units so long as the requested current exceeds the allowable maximum current.
   The electrical source will normally include one or more batteries, alternators and/or fuel cells, in some cases voltage regulators, and any wiring to the electrical consumer units.
   Usually, the electrical source will be at least one battery, although other electrical sources, such as fuel cells, may also be used to provide electrical power to motor vehicle consumer units.
   When the electrical load controlling means does limit the electrical current supplied to any of the consumer units, the limit of current to the affected unit may be any of: a cut off of current; a steady reduction in the current; or modulated cut off or reduction in current.
   The activated unit may be one that normally has a low priority such as a heated passenger seat. Such a consumer unit according to the predetermined criteria would not be allocated any electric current when the vehicle electrical system is operating at or near capacity. The person activating the consumer unit would then notice that the consumer unit was not operating, and interpret this as a fault with that particular unit of the vehicle's electrical system. According to the invention, however, when a user activates this unit, the electrical load controlling means alters the priority of the activated unit in such a way that this unit is temporarily given increased priority. In this case, the vehicle's electrical system can therefore be designed so that the recently activated consumer unit works at least to some extent during the temporary period in which it is accorded a relatively higher priority.
   The criteria may be altered such that the activated unit's priority is increased either in absolute terms, or simply relative to other consumer units' priority. For example, the predetermined criteria may be temporarily altered to decrease temporarily the priority accorded one or more other consumer units.
   Following the activation of the user-activatable consumer unit when the ability of the electrical source to deliver electrical current to the consumer units is impaired, the electrical current load controlling means in response to the temporarily altered criteria may cut off or reduce electrical current to said other consumer unit(s).
   The electrical consumer unit for which current is limited or cut off may be a user-activatable electrical consumer unit, such as a rear window heater, or an automatic electrical consumer unit, such as an electric motor for an engine fan.
   Preferably, the electrical current load controlling means in response to the temporarily altered criteria does not cut off or reduce electrical current to said activated consumer unit when the ability of the electrical source to deliver electrical current to the consumer units is impaired. This may, however, still be necessary in extreme circumstances, for example following the failure of a battery recharging system.
   After the temporary change to the criteria, the predetermined criteria are re-established. The activated unit may then be denied electrical current, or made to work on reduced current. The user, however, is much less likely to notice this after it has been clear during the temporary period that the activated unit was operating as expected.
   Therefore, the electrical current load controlling means can revert after a delay, which may be predetermined, to limit current to the user-activatable consumer unit according to the predetermined criteria when the ability of the electrical source to deliver electrical current to the consumer units is impaired.
   If one or more of the consumer units has an indicator to indicate when a unit is activated, then the indicator preferably continues to indicate to the user that said unit is activated even after the electrical current is limited according to the criteria.

Also according to the invention, there is provided a method of managing electrical load in a motor vehicle, the motor vehicle comprising a plurality of electrical consumer units including at least one user-activatable consumer unit, an electrical source, a monitoring means, an electrical current load controlling means for limiting electrical current to the consumer units, the electrical load controlling means including predetermined criteria by which some consumer units are accorded priority over other consumer units as regards any electrical current limitation, wherein the method comprises the steps of:
i) activating a user-activatable consumer unit;
ii) supplying from the electrical source electrical current to the consumer units;
iii) using the monitoring means to monitor the ability of the electrical source to deliver electrical current to the consumer units;
iv) using the electrical current load controlling means in response to the monitored current delivering ability to limit the electrical current supplied to at least one of the consumer units;
characterised in that the method comprises the steps of:
v) following activation of a user-activatable consumer unit (6-14) of lower priority when the expected current exceeds an allowable maximum, altering said criteria for a temporary period to increase the priority accorded said activated consumer unit so that the consumer unit is activated at least during the temporary period, and
vi) allocating current to others of the consumer units (6-14) according to criteria for the other consumer units so long as the requested current exceeds the allowable maximum current.

The invention will now be described, by way of example, with reference to the accompanying drawings, in which:
Figure 1 is a schematic view of a motor vehicle with an electrical load management system according to the invention, that has a number of electrical consumer units;
Figure 2 shows a priority table in which each electrical consumer unit is assigned a priority for its consumption of electrical power; and
Figure 3 is a flowchart showing a method of managing electrical load in a motor vehicle.

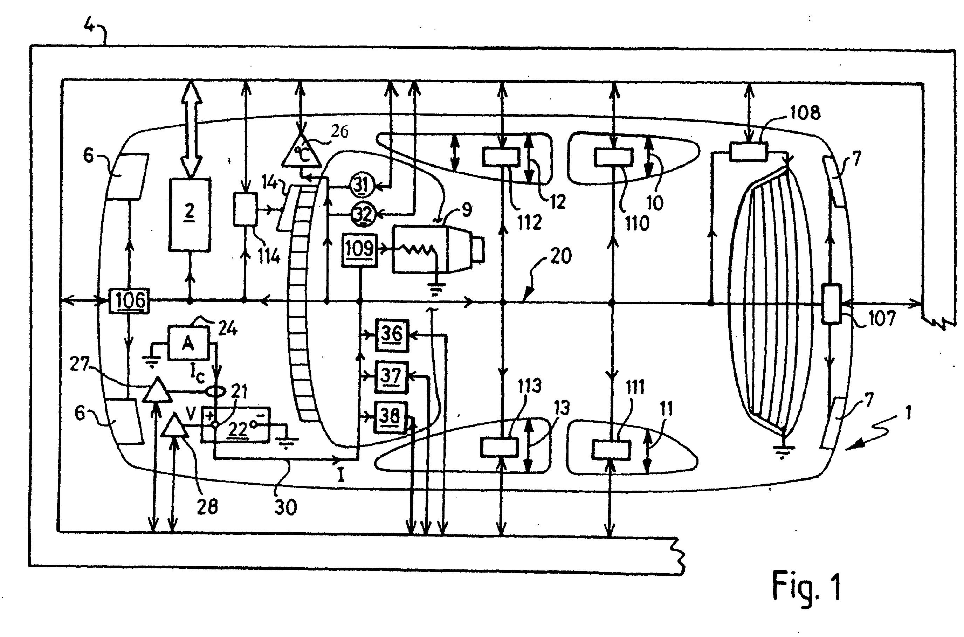

Figure 1 shows a schematic view of a motor vehicle 1 with an electrical load management system that comprises a central processor 2 linked to a data transmission means 4 to which are also linked a number of electrical consumer units 6-14 including front head lamps 6, rear tail lights 7, rear heated window 8, heated driver seat 9, four power windows 10-13, and a heater and air conditioning fan 14. The data transmission means 4 may include one or more data busses, such as a CAN bus, and associated processors that link the busses together. For convenience, the data transmission 4 means will be referred to simply as a "bus".

Each of the electrical consumer units 6-14 has an associated control module 106-114 which receives electrical current from wiring looms shown schematically and indicated generally in the drawing by reference numeral 20 connected to one terminal 21 of a battery 22. The same terminal 21 is also connected to a recharging system including an alternator 24.

Not shown are usual automatic electrical consumer units, such as an engine cooling fan, engine spark-ignition system, air suspension system or active damping system. These, however, would be connected to the bus 4 by means of a control module is a similar manner to the user-activatable electrical consumer units 6-14.

Also connected to the bus 4 are three sensors 26,27,28, which send data to the processor 2 to enable the processor to calculate the maximum allowable battery current (I) 30. These sensors are a temperature sensor 26 for sensing the ambient external temperature, a current sensor 27 for sensing the charge current (I_{c}) delivered by the alternator 24 to the battery 22, and a battery voltage sensor 28 for sensing the output voltage (V) at the battery terminal 21.

For any electrical consumer unit 6-14 to be activated, its associated control unit 106-114 must first receive from the processor 2 via the bus 4 a control signal, which either operates the consumer unit 6-14 at its full or nominal electrical current, or at some limited current. In some circumstances, the control unit 2 may decline to operate an electrical consumer unit 6-14 if the battery 22 is already delivering a current at or near a maximum allowable value.

The motor vehicle 1 includes a number of user-operable controls 31,32, which are also connected via the bus 4 to the processor 2. If a driver or other passenger of the vehicle 1 activates one of these user-operable controls 31,32, then a command is sent to the processor 2, which then sends a further command back on the bus 4 to one of the associated control units 106-114. Some electrical consumer units, whether or not these are user-operable or automatic, may have an associated indicator light 36,37,38 to indicate to a motor vehicle occupant that a particular electrical consumer unit 6-14 is activated.

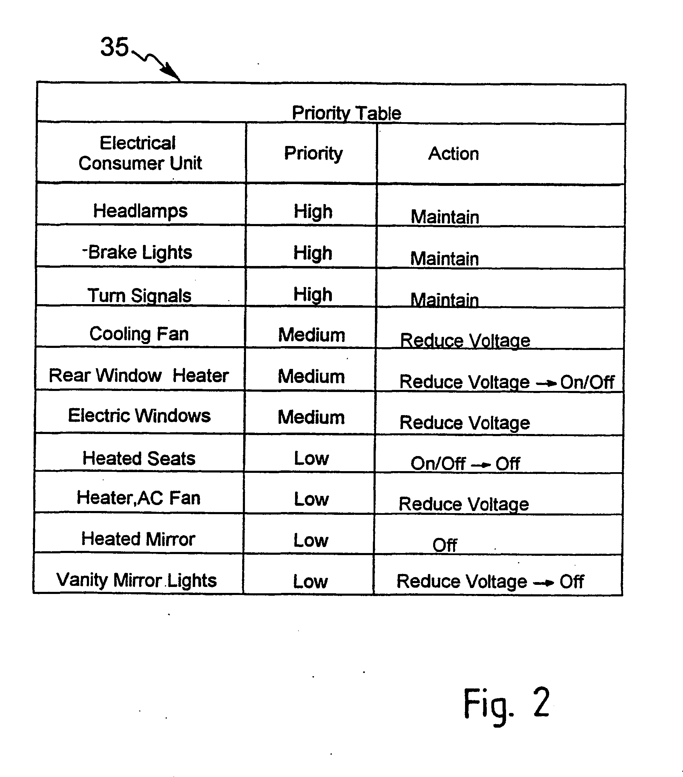

Referring now also to Figure 2, which shows a priority table 35, each electrical consumer unit is assigned a priority, for example high, medium or low. Certain electrical consumer units, such as headlamps 6, brake lights 7 or turn signal indicators, must for safety reasons always be operated at a full or nominal current rating. Other electrical consumer units, such as the rear window heater 8, electric windows 10-13, or an engine cooling fan 14, can be operated at less than nominal or full current if there is insufficient current for operation of all electrical consumer units 6-14. For example, an engine cooling fan may be operated at lower speed, particularly if the engine is not significantly overheating. An associated control unit for the engine cooling fan may then reduce the voltage or equivalently the current so that the engine cooling fan operates more slowly. The rear window heater 8 may also be operated at a reduced voltage, in which case the rear window may still be cleared of mist or frost, although at a slower rate. The rear window heater can consume a significant amount of current, and so in severe conditions, it may be permissible to cycle this between on and off states in order to keep the current drawn from the battery 22 within allowable limits. Similarly, electric windows 10-13 may be operated at reduced voltage in which case these windows. will still open or close, although more slowly.

Some electrical consumer units can be accorded low priority, either because these have no effect on vehicle safety, or because a driver or passenger will be tolerant if these are operated at a low functionality. Amongst these units are included heated seats 9, heater or air conditioning fans 14, external heated mirrors or internal vanity mirror lights.

The processor 2 includes a memory which stores criteria by which various electrical consumer units 6-14 may be shut down or operated at low full rating in order to conserve electrical current 30. For example, if the external temperature is above about 15°C then these criteria may show that electric heated windows may be cycled on/off, while if the temperature is below 0°C, these heated windows should not be operated on/off, but at the very least with a reduced steady voltage. These criteria,also include the priority listings in the priority table 35, so that if there is only moderate shortfall of available electrical current 30, then only electrical consumer units with a low priority will be affected. If there is a more severe shortage of available electrical current 30, then some medium priority electrical consumer units may additionally be affected.

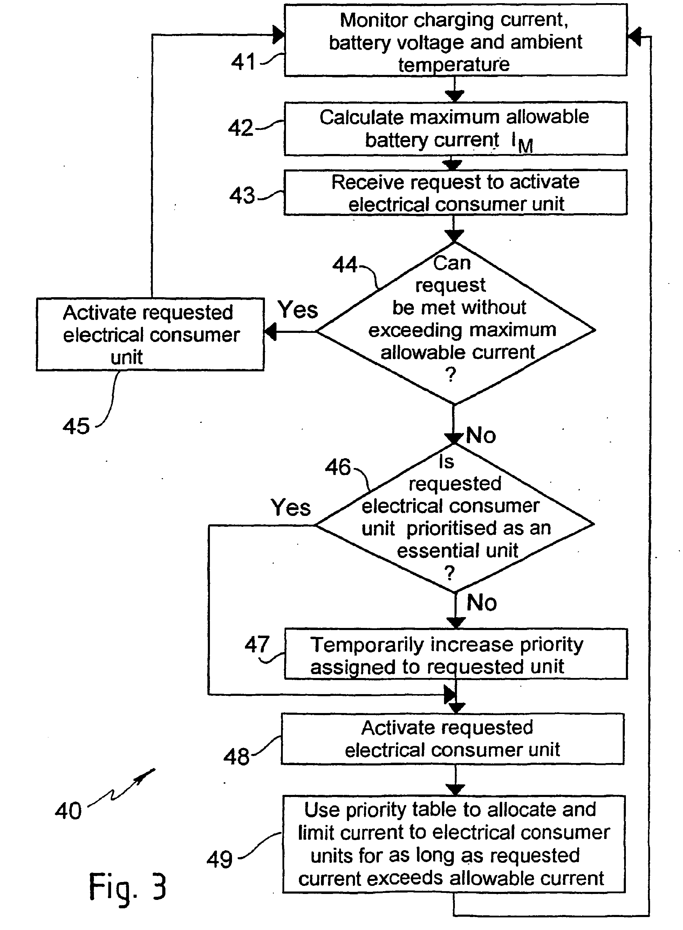

The invention can now be appreciated more fully with reference also to Figure 3, which shows a flow chart 40 describing operation of the electrical load management system. The control unit 2 monitors 41 a charging current (I_{C}), battery voltage (V) and ambient temperature (T). From this, the processor 2 can calculate 42 a maximum allowable battery current (I_{M}). If a vehicle occupant operates one of the controls 31,32 to activate a user-operable electrical consumer unit 6-14, then the processor 2 first then receives 43 this request via the bus 4. Since all significant electrical consumer units are controlled via the processor 2, the processor can calculate the total current drawn by these units at a particular battery voltage V and external temperature T. The processor 2 calculates the total expected current including the most recently requested user-operable electrical consumer unit, and then decides 44 whether or not the request can be met without exceeding the maximum allowable current I_{M}.

If the request can be met without exceeding the maximum allowance current I_{M}, then the processor 2 sends a signal to activate 45 the requested electrical consumer unit 6-14, without imposing any limitation on the current drawn by any of the consumer units. If, on the other hand, the total expected current does exceed the maximum allowable current I_{M} then the processor 2 checks 46 if the requested electrical consumer unit 6-14 is one of those with a high priority, for which it is essential that the unit is supplied with full or nominal electric current. If the electrical consumer unit is an essential unit, then the processor 2 sends a command to activate 48 this unit. If, on the other hand, the requested electrical unit is one with a lower priority, then the processor 2 temporarily increases 47 the priority assigned to this requested unit. The result is that when an electrical consumer unit is first requested, even if this unit does not have high priority, it will, at least during the temporary period during which its priority is increased, be active. Therefore, a user of the electrical consumer unit will not perceive that this unit is inoperative or operating below its nominal capacity.

As a consequence, it may be necessary to limit the current to other electrical consumer units. Therefore, the processor 2 uses 49 the priority table 35 to allocate and limit current to electrical consumer units according to the various criteria for these units, for as long as the requested current exceeds the allowable maximum current I_{M}.

The processor 2 then continues to monitor 41 the charging current I_{C}, drawn current I, battery voltage V and ambient temperature T, as described above.

If it is necessary to limit the current supply to any electrical consumer unit 6-14, then any indicator lights 36-38 or other type of indicator, will continue to show that an electrical consumer unit is activated, even when an electrical current to such a unit is limited. Therefore, a user of the electrical consumer units, and particularly of user-operable consumer units, will continue to see that units have been selected for activation, even when it is necessary in some way to limit the total current drawn by these units. If the total requested current drops below the maximum available current, then full functionality is restored to any affected electrical consumer units.

The invention therefore provides a convenient way of limiting and controlling the distribution of electrical power in a motor vehicle, in such a way that a user of the vehicle, particularly the driver, does not perceive that a unit which he has recently selected for operation is inoperable.

## Claims

1. A motor vehicle (1) with an electrical load management system comprising:
a) a plurality of electrical consumer units (6-14) including at least one user-activatable consumer unit (6-14) which has a control (31,32) by which said unit may be activated by a user;
b) an electrical source (22) for supplying electrical current to the consumer units (6-14);
c) a monitoring means (2,4,26-28,106-114) for monitoring the ability of the electrical source to deliver electrical current (I) to the consumer units;
d) an electrical current load controlling means (2,4,106-114) that is responsive to the monitoring means when the ability of the electrical source (22) to deliver electrical current to the consumer units is impaired, in order to limit the electrical current supplied to at least some of the consumer units including said user-activatable consumer unit according to predetermined criteria by which some consumer units are accorded priority over other consumer units as regards any electrical current limitation;
**characterised in that**
e) the electrical current load controlling means (2, 4, 106-114) are adapted to, following activation of a user-activatable consumer unit (6-14) of a lower priority and when the requested current exceeds an allowable maximum current, to alter the predetermined criteria for a temporary period to increase the priority accorded to said activated consumer unit (6-14) so that the consumer unit is activated at least during the temporary period, the electrical load current controlling means (2,4,106-114) being further adapted to allocate current to others of the consumer units (6-14) according to criteria for the other consumer units so long as the requested current exceeds the allowable maximum current.

2. A motor vehicle as claimed in Claim 1, in which the electrical current controlling means is further adapted to, following activation of the user-activatable consumer unit (6-14), temporarily alter the predetermined criteria to decrease temporarily the priority accorded one or more other consumer units (6-14).

3. A motor vehicle as claimed in Claim 2, in which the electrical current load controlling means (2,4,106-114), and in response to the temporarily altered criteria, are adapted to following said activation of the user-activatable consumer unit (6-14) cut off or limit electrical current to said other consumer unit(6-14), when the ability of the electrical source to deliver electrical current to the consumer units is impaired.

4. A motor vehicle as claimed in Claim 1, 2 or 3, in which the electrical current load controlling means (2,4,106-114) are adapted to following activation of the user-activatable consumer unit (6-14), and in response to the temporarily altered criteria, not reduce electrical current to said activated consumer unit when the ability of the electrical source to deliver electrical current to the consumer units (6-14) is impaired.

5. A motor vehicle as claimed in any preceding claim, in which the electrical current load controlling means (2,4,106-114) are adapted to, following activation of the user-activatable consumer unit (6-14), and in response to the temporarily altered criteria revert after a delay to limit current to the user-activatable consumer unit (6-14) in response to the predetermined criteria when the ability of the electrical source to deliver electrical current to the consumer units (6-14) is impaired.

6. A motor vehicle as claimed in Claim 5, in which said delay is predetermined.

7. A motor vehicle as claimed in any preceding claim, in which one or more consumer units (6-14) have an indicator (36,37,38) to indicate when a unit is activated, the indicator adapted to continue to indicate to the user that said unit (6-14) is activated even after the electrical current is limited according to the criteria.

8. A method of managing electrical load in a motor vehicle, the motor vehicle comprising a plurality of electrical consumer units (6-14) including at least one user-activatable consumer unit (6-14), an electrical source (22), a monitoring means (2,4,26-28,106-114), an electrical current load controlling means (2,4,106-114), for limiting electrical current to the consumer units (6-14), the electrical load controlling means (2,4,106-114), including predetermined criteria by which some consumer units (6-14) are accorded priority over other consumer units as regards any electrical current limitation, wherein the method comprises the steps of:
i) activating a user-activatable consumer unit (6-14);
ii) supplying from the electrical source (22) electrical current to the consumer units (6-14);
iii) using the monitoring means (2,4,26-28,106-114), to monitor the ability of the electrical source (22) to deliver electrical current to the consumer units (6-14);
iv) using the electrical current load controlling means (2,4,106-114) in response to the monitored current delivering ability to limit the electrical current supplied to at least one of the consumer units (6-14);
**characterised in that** the method comprises the steps of:
v) following activation of a user-activatable consumer unit (6-14) of lower priority when the expected current exceeds an allowable maximum, altering said criteria for a temporary period to increase the priority accorded said activated consumer unit so that the consumer unit is activated at least during the temporary period, and
vi) allocating current to others of the consumer units (6-14) according to criteria for the other consumer units so long as the requested current exceeds the allowable maximum current.

## Patentansprüche

1. Kraftfahrzeug (1) mit einem elektrischen Lastregelsystem, welches folgendes beinhaltet:
a) mehrere elektrische Verbrauchereinheiten (6-14), welche wenigstens eine vom Benutzer aktivierbare Verbrauchereinheit (6-14) umfassen, die eine Steuerung (31, 32) aufweist, mittels welcher sie von einem Benutzer aktiviert werden kann;
b) eine elektrische Quelle (22) zur Abgabe von elektrischem Strom an die Verbrauchereinheiten (6-14);
c) Überwachungsmittel (2, 4, 26-28, 106-114) zur Überwachung der Fähigkeit der elektrischen Quelle, elektrischen Strom (I) an die Verbrauchereinheiten abzugeben;
d) ein Mittel (2, 4, 106-114) zur elektrischen Laststromregelung, welches auf die Überwachungsmittel derart anspricht, wenn die Fähigkeit der elektrischen Quelle (22), elektrischen Strom an die Verbrauchereinheiten abzugeben, beeinträchtigt ist, daß es den an wenigstens einige der Verbrauchereinheiten abgegebenen elektrischen Strom begrenzt, einschließlich der besagten vom Benutzer aktivierbaren Verbrauchereinheiten, und zwar gemäß einem vorgegebenen Kriterium, so daß einigen Verbrauchereinheiten Priorität gegenüber anderen Verbrauchereinheiten in bezug auf eine Begrenzung des elektrischen Stromes eingeräumt wird;
**dadurch gekennzeichnet, daß**
e) die elektrischen Laststromregelungsmittel (2, 4, 106-114) ausgelegt sind, nach der Aktivierung einer vom Benutzer aktivierbaren Verbrauchereinheit (6-14) mit niederer Priorität, und wenn der geforderte Strom einen zulässigen Maximalstrom überschreitet, das vorgegebene Kriterium für einen vorübergehenden Zeitraum derart zu verändern, daß die der besagten, vom Benutzer aktivierbaren Verbrauchereinheit (6-14) erteilte Priorität erhöht wird, so daß die Verbrauchereinheit wenigstens für den vorübergehenden Zeitraum aktiviert wird, wobei die Mittel (2, 4, 106-114) zur Regelung der elektrischen Last des weiteren ausgelegt sind, Strom auch anderen Verbrauchereinheiten (6-14) zuzuteilen, und zwar gemäß Kriterien für diese anderen Verbrauchereinheiten, solange der geforderte Strom den zulässigen Maximalstrom überschreitet.

2. Kraftfahrzeug nach Anspruch 1, worin die Mittel zur Regelung des elektrischen Stromes außerdem ausgelegt sind, nach der Aktivierung der vom Benutzer aktivierbaren Verbrauchereinheit (6-14) das vorgegebene Kriterium vorübergehend zu verändern, so daß die einer oder mehreren Verbrauchereinheiten (6-14) erteilte Priorität vorübergehend gesenkt wird.

3. Kraftfahrzeug nach Anspruch 2, worin die Mittel (2, 4, 106-114) zur Regelung des elektrischen Stromes ausgelegt sind, nach besagter Aktivierung der vom Benutzer aktivierbaren Verbrauchereinheiten (6-14) und in Reaktion auf das besagte vorübergehend veränderte Kriterium, elektrischen Strom zu besagter anderer Verbrauchereinheit (6-14) abzuschalten oder zu begrenzen, wenn die Fähigkeit der elektrischen Quelle, elektrischen Strom an die Verbrauchereinheiten abzugeben, beeinträchtigt ist.

4. Kraftfahrzeug nach Anspruch 1, 2 oder 3, worin die Mittel (2, 4, 106-114) zur Regelung des elektrischen Stromes ausgelegt sind, nach der Aktivierung der vom Benutzer aktivierbaren Verbrauchereinheiten (6-14) und in Reaktion auf das besagte vorübergehend veränderte Kriterium, den elektrischen Strom zu besagter aktivierter Verbrauchereinheit nicht zu senken, wenn die Fähigkeit der elektrischen Quelle, elektrischen Strom an die Verbrauchereinheiten abzugeben, beeinträchtigt ist.

5. Kraftfahrzeug nach einem beliebigen der vorangehenden Ansprüche, worin die Mittel (2, 4, 106-114) zur Regelung des elektrischen Stromes ausgelegt sind, nach der Aktivierung der vom Benutzer aktivierbaren Verbrauchereinheiten (6-14) und in Reaktion auf das vorübergehend veränderte Kriterium, nach einer Verzögerung dazu zurückzukehren, den Strom zu der vom Benutzer aktivierbaren Verbrauchereinheit (6-14) zu begrenzen, in Reaktion auf das vorgegebene Kriterium, wenn die Fähigkeit der elektrischen Quelle, elektrischen Strom an die Verbrauchereinheiten (6-14) abzugeben, beeinträchtigt ist.

6. Kraftfahrzeug nach Anspruch 5, worin besagte Verzögerung vorgegeben ist.

7. Kraftfahrzeug nach einem beliebigen der vorangehenden Ansprüche, worin eine oder mehrere Verbrauchereinheit(en) (6-14) eine Anzeige (36, 37, 38) hat/haben, welche anzeigt, wann eine Einheit aktiviert ist, worin die Anzeige ausgelegt ist, mit der Anzeige der Aktivierung der besagten Verbrauchereinheit (6-14) fortzufahren, selbst nachdem die Stromzufuhr gemäß dem Kriterium begrenzt worden ist.

8. Verfahren zur elektrischen Lastregelung in einem Kraftfahrzeug, welches Kraftfahrzeug mehrere elektrische Verbrauchereinheiten (6-14) aufweist, welche wenigstens eine von einem Benutzer aktivierbare Verbrauchereinheit (6-14) beinhalten, eine elektrische Quelle (22), ein Überwachungsmittel (2, 4, 26-28, 106-114), ein Mittel (2, 4, 106-114) zur elektrischen Laststromregelung zur Begrenzung des an die Verbrauchereinheiten (6-14) abgegebenen elektrischen Stromes, wobei die Mittel zur elektrischen Lastregelung (2, 4, 106-114) vorgegebene Kriterien enthalten, mittels welcher bestimmten Verbrauchereinheiten (6-14) eine Priorität gegenüber anderen Verbrauchereinheiten bezüglich einer Begrenzung des elektrischen Stromes erteilt wird,
worin das Verfahren folgende Schritte beinhaltet:
i) Aktivieren einer vom Benutzer aktivierbaren Verbrauchereinheit (6-14);
ii) Zuführen von elektrischem Strom von der elektrischen Stromquelle (22) an die Verbrauchereinheiten (6-14);
iii) Einsetzen der Überwachungsmittel (2, 4, 26-28, 106-114) zur Überwachung der Fähigkeit der elektrischen Quelle (22), elektrischen Strom an die Verbrauchereinheiten (6-14) abzugeben;
iv) Einsetzen der elektrischen Laststromregelungsmittel (2, 4, 106-114) in Reaktion auf das überwachte Stromabgabevermögen dazu, den an wenigstens eine der Verbrauchereinheiten (6-14) abgegebenen elektrischen Strom zu begrenzen; **dadurch gekennzeichnet, daß** das Verfahren die folgenden Schritte beinhaltet:
v) im Anschluß an die Aktivierung einer vom Benutzer aktivierbaren Verbrauchereinheit (6-14) mit niederer Priorität, wenn der zu erwartende Strom einen zulässigen Höchstwert übersteigt, die Abänderung des besagten Kriteriums für einen vorübergehenden Zeitraum derart, daß die der besagten aktivierten Verbrauchereinheit erteilte Priorität erhöht wird, so daß die Verbrauchereinheit wenigstens während des vorübergehenden Zeitraumes aktiviert ist, und
vi) Zuteilen von Strom an andere der Verbrauchereinheiten (6-14) gemäß Kriterien für die anderen Verbrauchereinheiten, solange der geforderte Strom den zulässigen Maximalstrom übersteigt.

## Revendications

1. Véhicule motorisé (1) doté d'un système de gestion de charge électrique, comprenant :
a) une pluralité d'unités électriques pour usager (6 - 14) incluant au moins une unité pour usager à déclenchement manuel (6 - 14), qui possède une commande (31, 32) au moyen de laquelle ladite unité peut être activée par un usager ;
b) une source d'alimentation électrique (22) pour alimenter les unités électriques pour usager (6-14) en courant électrique ;
c) un moyen de surveillance (2, 4, 26 - 28, 106 - 114) pour surveiller la capacité de la source d'alimentation électrique à fournir du courant électrique (I) aux unités pour usager ;
d) un moyen de commande du courant de charge électrique (2, 4, 106 -114) qui réagit au moyen de surveillance lorsque la capacité de la source d'alimentation électrique (22) à fournir du courant électrique aux unités pour usager est déficiente, afin de limiter le courant électrique qui est fourni à certaines au moins parmi les unités pour usager, dont ladite unité pour usager à déclenchement manuel, en fonction de critères prédéterminés selon lesquels certaines unités pour usager sont priorisées par rapport à d'autres unités pour usager en ce qui concerne toute limitation de courant électrique ;
**caractérisé en ce que**
e) le moyen de commande du courant de charge électrique (2, 4, 106 - 114) est apte, suite au déclenchement d'une unité pour usager à déclenchement manuel (6 - 14) dotée d'une priorité inférieure et lorsque le courant requis dépasse un courant maximal permis, à altérer les critères prédéterminés pendant une période temporaire afin d'augmenter la priorité accordée à ladite unité pour usager déclenchée (6 - 14), de sorte que l'unité pour usager soit déclenchée pendant la période temporaire au moins, le moyen de commande de charge de courant électrique (2, 4, 106 - 114) étant en outre apte à allouer du courant aux autres unités pour usager (6 - 14) en fonction de critères pour les autres unités pour usager tant que le courant requis dépasse le courant maximal permis.

2. Véhicule motorisé selon la revendication 1, dans lequel le moyen de commande de courant électrique est en outre apte, suite au déclenchement de l'unité pour usager à déclenchement manuel (6 - 14), à altérer temporairement les critères prédéterminés pendant une période temporaire afin de réduire la priorité accordée à une ou plusieurs autres unités pour usager (6 - 14).

3. Véhicule motorisé selon la revendication 2, dans lequel le moyen de commande de charge de courant électrique (2, 4, 106 - 114) est apte, en réponse aux critères temporairement altérés et suite audit déclenchement de l'unité pour usager à déclenchement manuel (6 - 14), à interrompre ou limiter le courant électrique vers ladite autre unité pour usager (6 - 14) lorsque la capacité de la source d'alimentation électrique à fournir du courant électrique aux unités pour usager est déficiente.

4. Véhicule motorisé selon la revendication 1, 2 ou 3, dans lequel le moyen de commande de charge de courant électrique (2, 4, 106 - 114) est apte, suite au déclenchement de l'unité pour usager à déclenchement manuel (6 - 14) et en réponse aux critères temporairement altérés, à ne pas réduire le courant électrique vers ladite unité pour usager lorsque la capacité de la source d'alimentation électrique à fournir du courant électrique aux unités pour usager (6-14) est déficiente.

5. Véhicule motorisé selon l'une des revendications précédentes, dans lequel le moyen de commande de charge de courant électrique (2, 4, 106 - 114) est apte, suite au déclenchement de l'unité pour usager à déclenchement manuel (6 - 14) et en réponse aux critères temporairement altérés, à se rétablir après un délai afin de limiter le courant vers l'unité pour usager à déclenchement manuel (6 - 14), en réponse aux critères prédéterminés lorsque la capacité de la source d'alimentation électrique à fournir du courant électrique aux unités pour usager (6-14) est déficiente.

6. Véhicule motorisé selon la revendication 5, dans lequel ledit délai est prédéterminé.

7. Véhicule motorisé selon l'une des revendications précédentes, dans lequel une ou plusieurs unités pour usager (6 - 14) possèdent un indicateur pour indiquer le déclenchement d'une unité, l'indicateur étant apte à continuer à indiquer le déclenchement de ladite unité (6 - 14) audit usager même suite à la limitation du courant électrique selon les critères.

8. Procédé de gestion de charge électrique dans un véhicule motorisé, le véhicule motorisé comprenant une pluralité d'unités électriques pour usager (6 - 14) incluant au moins une unité pour usager à déclenchement manuel (6 - 14), une source d'alimentation électrique (22), un moyen de surveillance (2, 4, 26 - 28, 106-114), un moyen de commande de charge de courant électrique (2, 4, 106 - 114) pour limiter le courant électrique fourni aux unités pour usager (6 - 14), le moyen de commande de charge de courant électrique (2, 4, 106 - 114) incluant des critères prédéterminés selon lesquels certaines unités pour usager (6 - 14) sont priorisées par rapport à d'autres unités pour usager en ce qui concerne toute limitation de courant électrique, le procédé comprenant lest étapes consistant à :
i) déclencher une unité pour usager à déclenchement manuel (6 - 14) ;
ii) alimenter les unités électriques pour usager (6 - 14) en courant électrique depuis la source d'alimentation électrique (22) ;
iii) utiliser le moyen de surveillance (2, 4, 26 - 28, 106 - 114) pour surveiller la capacité de la source d'alimentation électrique (22) à fournir du courant électrique aux unités pour usager (6-14);
iv) utiliser le moyen de commande de charge de courant électrique (2, 4, 106 - 114), en réaction à la capacité de fourniture de courant électrique surveillée, pour limiter le courant électrique qui est fourni à l'une au moins parmi les unités pour usager (6 - 14) ;
**caractérisé en ce que** le procédé comprend les étapes consistant à :
v) suite au déclenchement d'une unité pour usager à déclenchement manuel (6 - 14) dotée d'une priorité inférieure lorsque le courant escompté dépasse un maximum permis, altérer lesdits critères pendant une période temporaire afin d'augmenter la priorité accordée à ladite unité pour usager déclenchée, de sorte que l'unité pour usager soit déclenchée pendant la période temporaire au moins, et
vi) allouer du courant à d'autres parmi les unités pour usager (6-14) en fonction de critères pour les autres unités pour usager tant que le courant requis dépasse le courant maximal permis.
